# EUROPEAN PATENT SPECIFICATION

(11) **EP 2 106 415 B1**
(45) Date of publication and mention of the grant of the patent: **20.04.2016**
(21) Application number: 08713824.4
(22) Date of filing: 18.01.2008
(51) Int. Cl.: C08G 18/08, C08G 18/18, C08G 18/34, C08L 75/04, C08G 18/32, C08G 18/40, C08G 18/48, C08G 18/66, C08G 18/76, C08G 101/00

(54) **TERTIARY AMINES BLOCKED WITH POLYMER ACIDS**
MIT POLYMERSÄUREN BLOCKIERTE TERTIÄRE AMINE
AMINES TERTIAIRES BLOQUÉES AU MOYEN D'ACIDES POLYMÈRES

(30) Priority: 19.01.2007 US 881282 P
(43) Date of publication of application: 07.10.2009
(73) Proprietor: Huntsman Petrochemical LLC, The Woodlands, TX 77380 (US)
(72) Inventor: RISTER, Ernest, L., Jr., Round Rock, TX 78664 (US); GRIGSBY, Robert, A., Jr., Spring, TX 77386 (US); MOORE, Robert, B., Leander, TX 78641 (US)
(74) Representative: Swinnen, Anne-Marie
(86) International application number: PCT/US2008/051442
(87) International publication number: WO 2008/089411

(56) References cited:
- EP-A2- 0 471 260
- WO-A1-98/20058
- US-A- 2 932 621
- US-A- 4 731 391
- US-A- 4 785 027
- US-B1- 6 660 781
- US-B2- 6 559 196

## Description

### CROSS-REFERENCE TO RELATED APPLICATIONS

This application claims the benefit of US provisional application 60/881,282, filed January 19, 2007.

### FIELD OF THE INVENTION

This invention relates to methods of using tertiary amine(s) blocked with polymer acid(s) as a catalyst to produce polyurethane foams.

### BACKGROUND OF THE INVENTION

A typical polyurethane polymerization process comprises the combination of an isocyanate, a polyol, and optionally a catalyst. Other conventional ingredients (additives and/or auxiliaries) may be used in making the polyurethanes. These include surfactants (to control the time of cell opening), cross linking or chain extending agents (for example, low molecular weight compounds such as diols, triols and diamines), flame proofing agents (for example, halogenated alkyl phosphates), fillers and pigments or colors. Foam stabilizers, for example polysiloxane-polyalkylene oxide block copolymers, may be used to stabilize or regulate the cells of the foam.

In some embodiments, the reaction rate between the isocyanate and polyol may be controlled through the use of a catalyst. It may also be desirable to control the density and hardness of the polyurethane foam. In these embodiments, a blowing agent, such as water, may be combined with the isocyanate to produce carbon dioxide and form urea polymer or copolymer. The amount and speed of urea polymer or copolymer formed impacts the overall density of the foam, which may range generally between about 4.8 kg/m³ (0.3 pounds per cubic foot (pcf) and about 30 pcf). Thus, by controlling the reaction rate between the blowing agent and isocyanate it is possible to control the density and hardness of the foam.

For the purposes of this disclosure, "gelling catalyst" is defined as material that is used to control the reaction rate of the polyol and isocyanate. For the purposes of this disclosure, "blowing catalyst" is defined as material that is used to control the reaction rate of the blowing agent and isocyanate. Gelling catalyst and blowing catalyst may be either the same or different tertiary amine(s) or a metal carboxylate(s).

Accordingly, what is needed is a method to control the reactivity of the blowing and gelling catalysts. Formic acid is effective in blocking or delaying the catalytic activity of tertiary amines, and has been used for just such a purpose. The corrosive nature, however, of the formic acid, and amine salts, derived thereof, hinders this approach. Other, less-corrosive higher molecular weight, acids-such as hydroxyl-containing acids, halocarboxylic acids or chloro-hydroxyl acids-have been proposed. For example, US Patent 2,932,621 discloses the preparation of a polyester foam utilizing N,N-dimethylaminoethanol and dicarboxylic acids with a mixture having a pH value of 8 to 11; US Patent 5,489,618 discloses the use of a tertiary amine salt of a carboxylic acid having hydroxyl functionality; US Patent 6,835,757 discloses the use of a tertiary amino alkyl amid that is blocked with a variety of acids; US patent 6,387,972 discloses the use of certain tertiary amine, mixtures of amines and at least one carboxylic acid salt of a specific reactive tertiary amine of a hydroxyl-carboxylic acid and halocarboxylic acid salt; U.S. Patent No. 4,701,474 discloses the use of acid grafted polyether polyols as reactivity controller; U.S Patent No. 4,785,027 discloses the use of polyether acids that are mono or di-acids with the functional group at the end of the polymer chain. The polymer chain is formed from ethylene or propylene oxide to have repeating alkoxy groups. In the case of mono-acids, the other terminal group can be alkyl or hydroxyl function; U.S. Patent 4,232,152 discloses the use of the amine salts of tertiary amino-acids as delayed action catalysts in the production of polyurethanes; and U.S Patent Nos. 4,040,992 and U.S Patent 4,582,861 disclose the use of quaternary ammonium salts carboxylate salts as delayed action catalysts for the production of polyurethane foams.

However the above acids can be toxic and have been shown to give higher emissions than the non-blocked tertiary amine. An additional drawback to these acids is their generally poor humid aged tensile values, as tested by Diemler Chrysler standard test PV3410. Moreover, many governments require registration and approval of any change to the amounts of tertiary amine relative to the acid, which drastically increases the cost and complexity of using the same on a commercial level.

Accordingly, what is needed are foams having improved cure rates, lower humid aged compression sets for instance, with lower emissions by the VDA 278 method for example and produce foams with shorter mold cycle times by delaying the onset of the foam initiation or improve the liquid distribution in the mold of the foam mixture by delaying the cream time. It is also desirable to reduce the number of costly registrations of know polymers and known tertiary amine mixtures.

### SUMMARY OF THE INVENTION

### Definitions

For the purposes of this disclosure, the term "monomer" is defined as any material containing one double bond, which is capable of reacting with another molecule, and preferably the double bond of another monomeric molecule.

For the purposes of this disclosure, the terms "unsaturated acid" and "anhydride" are defined as any acid containing at least one double bond, and is capable of being polymerized to at least three repeating units with either itself, or another acid or anhydride containing monomer, or any nonacid-containing monomer mentioned herein. Suitable unsaturated acids and anhydrides include acrylic acid (propenoic acid), maleic acid and anhydride, furoic (pyromucic acid), fumaric acid (boletic acid, lichenic acid allomaleic acid, transbutenediocacid), sorbic acid (2-4 hexadienoic acid), tiglic acid (methyl crotonic acid, crotonolic acid, tran-2-methyl-2-butenoic acid), linoleic acid, linolenic acid, licanic acid (4-keto-9,11,13-octadectriienoic acid) and other acids containing double bonds, which are capable of reacting with ethylenic unsaturated monomers or dimers.

For the purposes of this disclosure, the term "polymer acid" is defined in two ways. First, a "polymer acid" is any material containing three or more of the same repeating monomers of either an unsaturated carboxylic acid or an anhydride. Second, a "polymer acid" is any material containing at least two repeating monomers, wherein the first monomer is either an unsaturated carboxylic acid or an anhydride, and the second monomer is different. Thus, in the embodiment wherein the first monomer is an unsaturated carboxylic acid, the second different monomer may be a different unsaturated carboxylic acid, an anhydride, or another monomer. Alternatively, in the embodiment wherein the first monomer is an anhydride, the second different monomer may be an unsaturated carboxylic acid, a different anhydride, or another monomer. A preferably alternative monomer to the unsaturated carboxylic acid or anhydride monomer is a vinyl monomer. Suitable vinyl monomers include styrene, ethylene, propylene, butylenes, acrylonitril, vinyl chloride, and the like.

For the purposes of this disclosure, the term "tertiary amine" is defined as any organic material that contains one or more tertiary amino groups. Suitable "tertiary amines" include those, which are generally accepted as being suitable for use as a gelling catalyst, such as triethylene diamine; substituted imidazoles such as 1-2 dimethylimidazole,1-methyl-2-hydroxyethylimidazole; N,N'dimethylpiperazine or substituted piperazines such as aminoethylpiperazine or bis(N-methyl piperazine)ethylurea or N,N',N'trimethyl aminoethylpiperazine; N-methylpyrrolidines and substituted methyl pyrrolidines such as 2-aminoethyl-N,methylpyrrolidines or Bis(N-methylpyrrolidine)ethyl urea; or other tertiary aminoalkylureas or bis(tertiary amino alkyl) urea such as N,N-(3-dimethylaminopropyl)urea; 3-dimethylaminopropylamine; N,N,N"N"tetramethyldipropylenetriamine; N,N-bis(3-dimethylaminopropyl) 1-3propanediamine; N,N-dimethylamino-N',N'bis(hydroxyl-(2)-propylpropylene(1,3)diamine;tetramethylguanidine; Dimethylaminopropylamine,1,2 bis-diisopropanol(3-dimethylaminopropylamine), substituted piperidines and aminotriazines such N,N dimethylaminopropyl-S-triazine. Other suitable "tertiary amines" include those, which are generally accepted as being suitable for use as a blowing catalyst, such as N-alkylmorpholines such as N-methylmorpholine, N-ethylmorpholine,N-butylmorpholine, and dimorpholinodiethylether; N,Ndimethylaminoethanol; N,N-dimethylaminoethoxyethanol; Bis(dimethylaminopropyl)-amino-2-propanol; Bis(dimethylamino)-2-propanol; Bis(N,N-dimethylamino)ethylether; N,N,N'Trimethyl-N'hydroxyethyl-Bis-(aminoethyl)ether; N,N dimethylaminoethyl-N'-methyl aminoethanol; tetramethyliminobispropylamine; or other tertiary amines as described within Flexible Urethane Foams, Heerington, Dow, 1991; High Polymers, Volume XVI Polyurethanes part 1 and 2, Saunders and Frisch, Intersience Publishers, 1962 and 1964; and Plastics Handbook, Polyurethanes, Volume VII, Hanser-Verlag, Munich and Vienna, First and Second Editions 1966 and 1983, the disclosures of which are all hereby incorporated by reference in full, and to the extent it is consistent with the disclosure herein. Other further suitable tertiary amines, include those described within The Polyurethane Book, Chapter 9, Robert Zimmerman, 2002 or Journal of Cellular Plastics, Volume 28, 1992 pages 360 to 398, the disclosure of which are both hereby incorporated by reference in full, and to the extent it is consistent with the disclosure herein. Still further suitable tertiary amines include mixtures and combinations of any of the above-mentioned tertiary amines, including mixtures comprising any number of gelling and blowing catalysts.

In an embodiment this invention related to a method of making a polyurethane foam. The method includes combining a polymer acid and a tertiary amine to form a catalyst. The method further includes combining the catalyst, an isocyanate, and a polyol to form a polyurethane.

The following paragraphs 1-20 are included for support of claims in states wherein multiple dependent claims are permissive, and cost effective:
1) A method of making a polyurethane foam comprising:
   combining a polymer acid and a tertiary amine to form a catalyst; and
   combining the catalyst, an isocyanate, and a polyol to form a polyurethane, wherein the polymer acid contains at least two repeating monomers, wherein the first monomer is selected from the group consisting of an unsaturated carboxylic acid and an anhydride, and the second monomer is different from the first monomer.
2) The method of paragraph 1, wherein the polymer acid contains at least three of more of the same repeating monomers, wherein the monomers are selected from the group consisting of an unsaturated carboxylic acid and an anhydride.
3) The method of paragraph 1, wherein the polymer acid contains least two repeating or monomers, wherein the first monomer is selected from the group consisting of an unsaturated carboxylic acid and an anhydride, and the second monomer is different from the first monomer.
4) The method of paragraphs 2 and 3, wherein the unsaturated acid and anhydride is selected from the group consisting of acrylic acid (propenoic acid), maleic acid and anhydride, furoic (pyromucic acid), fumaric acid (boletic acid, lichenic acid allomaleic acid, transbutenediocacid), sorbic acid (2-4 hexadienoic acid), tiglic acid (methyl crotonic acid, crotonolic acid, tran-2-methyl-2-butenoic acid), linoleic acid, linolenic acid, licanic acid (4-keto-9,11,13-octadectriienoic acid) and other acids containing double bonds capable of reacting with ethylenic unsaturated monomers or dimers.
5) The method of paragraphs 3 and 4, wherein the first monomer is an unsaturated carboxylic acid, and the second different monomer is a selected from the group consisting of a different unsaturated carboxylic acid, an anhydride, and another monomer.
6) The method of paragraphs 3 through 5, wherein the first monomer is an anhydride, and the second different monomer is selected from the group consisting of an unsaturated carboxylic acid, a different anhydride, and another monomer.
7) The method of paragraphs 5 and 6, wherein the another monomer is a vinyl monomer selected from the group consisting of styrene, ethylene, propylene, butylenes, acrylonitrile, vinyl chloride, and the like.
8) The method of paragraphs 1 through 7, wherein the tertiary amine is selected from the group consisting of triethylene diamine; substituted imidazoles such as 1-2 dimethylimidazole,1-methyl-2-hydroxyethylimidazole; N,N'dimethylpiperazine or substituted piperazines such as aminoethylpiperazine or bis(N-methyl piperazine)ethylurea or N,N',N'trimethyl aminoethylpiperazine; N-methylpyrrolidines and substituted methyl pyrrolidines such as 2-aminoethyl-N,methylpyrrolidines or Bis(N-methylpyrrolidine)ethyl urea; or other tertiary aminoalkylureas or bis(tertiary amino alkyl) urea such as N,N-(3-dimethylaminopropyl)urea; 3-dimethylaminopropylamine; N,N,N"N"tetramethyldipropylenetriamine; N,N-bis(3-dimethylaminopropyl) 1-3propanediamine; N,N-dimethylamino-N',N'bis(hydroxyl-(2)-propylpropylene(1,3)diamine;tetramethylguanidine; Dimethylaminopropylamine,1,2 bis-diisopropanol(3-dimethylaminopropylamine), substituted piperidines and aminotriazines such N,N dimethylaminopropyl-S-triazine; N-alkylmorpholines such as N-methylmorpholine, N-ethylmorpholine,N-butylmorpholine, and dimorpholinodiethylether; N,Ndimethylaminoethanol; N,N-dimethylaminoethoxyethanol; Bis(dimethylaminopropyl)-amino-2-propanol; Bis(dimethylamino)-2-propanol; Bis(N,N-dimethylamino)ethylether; N,N,N'Trimethyl-N'hydroxyethyl-Bis-(aminoethyl)ether; N,N dimethylaminoethyl-N'-methyl aminoethanol; tetramethyliminobispropylamine, and mixtures thereof.
9) The method of paragraphs 1 through 8, wherein the polymer acid and a tertiary amine are combined separately and prior to the combination of the isocyanate and the polyol.
10) The method of paragraphs 1 through 9, wherein the polymer acid, tertiary amine, isocyanate, and polyol are combined in the same step.
11) The method of paragraphs 1 through 10, wherein the molar ratio of polymer acid and a tertiary amine of step (a) ranges from 1:0.05 to 1:100.
12) The method of paragraphs 1 through 11, wherein the isocyanate is selected from the group consisting of methylene diphenyl diisocyanate (MDI), 2,4- and 2,6-toluene diisocyanate (TDI), triisocyanates polymethylene poly(phenylene isocyanates), polymeric MDI, crude MDI, isopharone diisocyanate, hexamethylene diisocyanate, TMXDI, and mixtures of 2,4-tolulene diisocyanate and 2,6-tolulene diisocyanate (TDI).
13) The method of paragraphs 1 through 12, further comprising the combination of crosslinkers, silicone surfactants, chain extenders, flame proofing agents, and pigments.
14) The method of paragraphs 1 through 13, wherein a polyurethane foam is formed.
15) The method of paragraph 14, wherein the formed polyurethane has a compression set and humid aged compression set of less than about 30.0%.
16) The method of paragraphs 14 and 15, wherein less than 25.0 micrograms of carbon is formed per gram of polyurethane foam.
17) The method of paragraphs 14 through 16, wherein the formed polyurethane has a compression set and humid aged compression set of less than about 20.0%.
18) The method of paragraphs 14 through 17, wherein the formed polyurethane has a compression set and humid aged compression set of less than about 15.0% and less than about 15 micrograms of carbon per gram of formed foam.
19) The method of paragraphs 14 through 18, wherein the formed polyurethane has a compression set and humid aged compression set of less than about 10.0% and less than about 10 micrograms of carbon per gram of formed foam.
20) The method of paragraphs 14 through 19, wherein the formed polyurethane has a compression set and humid aged compression set of less than about 10.0% and less than about 5 micrograms of carbon per gram of formed foam.

### DISCLOSURE OF THE INVENTION

In an embodiment, inventive catalysts are formed by mixing at least one tertiary amine with at least one polymer acid. The inventive catalysts are thus, generally, polymer acid salts. The tertiary amine and polymer acid may be mixed under ambient conditions, or at a temperature ranging from about 5°C to about 200°C, alternatively from about 10°C to about 100°C, alternatively from 20°C to about 65°C. The tertiary amine or polymer acid may optionally contain a diluent such as water, glycol, or solvent.

The mixture may contain from about 5% to about 95% tertiary amine, alternatively from about 40% to about 90% tertiary amine, and alternatively from 60% to 90% tertiary amine, by weight based on the weight of the total mixture. The mixture may contain from about 5% to about 60% polymer acid, alternatively from about 15% to about 50% polymer acid, and alternatively from 20% to 40% polymer acid, by weight based on the weight of the total mixture. The mixture may contain from about 0% to about 60% diluent or solvent, alternatively from about 0% to about 40% diluent or solvent, and alternatively from 5% to 20% diluent or solvent, by weight based on the weight of the total mixture.

These materials may be pre-mixed and then added to a conventional polyurethane foam formulation as the sole catalyst or in combination with other catalysts. Alternatively, the materials may be mixed *in situ* during the formation of the polyurethane foam. The amount of catalyst used in the formation of polyurethane foam will vary depending on the desired properties of the foam, and will be apparent to one of ordinary skill in the art.

### Production Of Polyurethane Foams

The production of polyurethane foams is generally known in the art. For example, U.S. Pat. No. 6,387,972 generally discloses a "one shot foam process" for making polyurethane foam. U.S. Pat. No. 6,503,997 generally discloses a "prepolymer method" for making polyurethane foam. The preceding disclosures and methods of producing polyurethane foam are intended to be illustrative, and non-limiting.

Suitable polyols of the present invention include those generally known in the art. Particularly useful polyols include those having functionality of 1.5 to 8.0 and having hydroxyl numbers in the range of from about 10 to about 700 mg KOH/gram. The hydroxyl numbers are preferably between about 20 to about 60 for flexible foams, between about 100 to about 300 for semi-flexible foams and between about 250 to about 700 for rigid foams.

The polyisocyanates that are useful in the polyurethane foam formation include any of those generally known in the art. Preferably organic polyisocyanates include compounds that contain at least two isocyanate groups and generally will be any of the known aromatic or aliphatic polyisocyanates. Suitable organic polyisocyanates include, for example, the hydrocarbon diisocyanates, (e.g. the alkylenediisocyanates and the arylene diisocyanates), such as methylene diphenyl diisocyanate (MDI) and 2,4- and 2,6-toluene diisocyanate (TDI), as well as known triisocyanates polymethylene poly(phenylene isocyanates) also known as polymeric or crude MDI, isopharone diisocyanate, hexamethylene diisocyanate, and TMXDI. Alternative isocyanates include mixtures of 2,4-tolulene diisocyanate and 2,6-tolulene diisocyanate (TDI) in proportions by weight of about 80% and about 20% respectively and also about 65% and about 35% respectively; mixtures of TDI and polymeric MDI, preferably in the proportion by weight of about 80% TDI and about 20% of crude polymeric MDI to about 50% TDI and about 50% crude polymeric MDI; and all polyisocyanates of the MDI type. Still further suitable polyisocyanates include those of the MDI type and crude polymeric MDI.

The amount of polyisocyanate included in the foam formulations used relative to the amount of other materials in the formulations is described in terms of "Isocyanate Index". "Isocyanate Index" means the actual amount of polyisocyanate used divided by the theoretically required stoichiometric amount of polyisocyanate required to react with all the active hydrogen in the reaction mixture multiplied by one hundred (100). For example, see Oertel, Polyurethane Handbook, Hanser Publishers, New York, N.Y. (1985)]. The Isocyanate Indices in the reaction mixtures used in the process of this invention generally are between 60 and 140. More usually, the Isocyanate Index is: for flexible TDI foams, typically between 85 and 120; for molded TDI foams, normally between 80 and 105; for molded MDI foams, most often between 70 and 105; and for rigid MDI foams, generally between 90 and 130. Some examples of polyisocyanurate rigid foams are produced at indices as high as 250-400.

Water often is used as a reactive blowing agent in both flexible and rigid foams. In the production of flexible slabstock foams, water generally can be used in concentrations of, e.g., between 0.8 to 6.5 parts per hundred parts of polyol (phpp), and more often between 3.5 to 5.5 phpp. Water levels for TDI molded foams normally range, e.g., from 3 to 4.5 phpp. For MDI molded foam, the water level, for example, is more normally between 2.5 and 5 phpp. Rigid foam water levels, for example, range from 0.5 to 5 parts, and more often from 0.5 to 1 phpp. Packaging foams may contain in excess of 40 pbw water. Physical blowing agents such as blowing agents based on volatile hydrocarbons or halogenated hydrocarbons and other non-reacting gases can also be used in the production of polyurethane foams in accordance with the present invention. A significant proportion of the rigid insulation foam produced is blown with volatile hydrocarbons or halogenated hydrocarbons and the preferred blowing agents are the hydrochlorofluorocarbons (HCFC), hydrofluorocarbons (HFC) and the volatile hydrocarbons pentane and cyclopentane. In the production of flexible slabstock foams, water is the main blowing agent; however, other blowing agents can be used as auxiliary blowing agents. For flexible slabstock foams, the preferred auxiliary blowing agents are liquid carbon dioxide and dichloromethane (methylene chloride). Other blowing agents may also be used such as, e.g., the chlorofluorocarbon (CFC) trichloromonofluoromethane (CFC-11). And suitable inert blowing agents include metal carboxylates, methylene dichloride, pentanes, acetone, fluorocarbons and chlorofluorocarbons. When used, the amount of hydrocarbon-type blowing agent varies from, e.g., a trace amount up to about 50 parts per hundred parts of polyol (phpp) and CO.sub.2 varies from, e.g., about 1 to about 10%.

Crosslinkers also may be used in the production of polyurethane foams. Crosslinkers are typically small molecules; usually less than 350 molecular weight, which contain active hydrogens for reaction with the isocyanate. The functionality of a crosslinker is greater than 3 and preferably between 3 and 5. The amount of crosslinker used can vary between about 0.1 phpp and about 20 phpp and the amount used is adjusted to achieve the required foam stabilization or foam hardness. Examples of crosslinkers include glycerine, diethanolamine, triethanolamine and tetrahydroxyethylethylenediamine, diethanol amine, diisopropanol amine, ethoxylated ethylene diamine and other low molecular weight materials containing more than one active hydrogen atom per molecule.

Silicone surfactants that may be used in the process of this invention include, e.g., "hydrolysable" polysiloxane-polyoxyalkylene block copolymers, "non-hydrolysable" polysiloxane-polyoxyalkylene block copolymers, cyanoalkylpolysiloxanes, alkylpolysiloxanes, and polydimethylsiloxane oils. The type of silicone surfactant used and the amount required depends on the type of foam produced as recognized by those skilled in the art. Silicone surfactants can be used as such or dissolved in solvents such as glycols. For flexible slabstock foams the reaction mixture usually contains from about 0.1 to about 6 phpp of silicone surfactant, and more often from about 0.7 to about 2.5 phpp. For flexible molded foam the reaction mixture usually contains about 0.1 to about 5 phpp of silicone surfactant, and more often about 0.5 to about 2.5 phpp. For rigid foams the reaction mixture usually contains about 0.1 to about 5 phpp of silicone surfactant, and more often from about 0.5 to about 3.5 phpp. The amount used is adjusted to achieve the required foam cell structure and foam stabilization.

Temperatures useful for the production of polyurethanes vary depending on the type of foam and specific process used for production as well understood by those skilled in the art. In various embodiments, the reactants may be combined at any temperature ranging from about 10°C to about 100°C, alternatively from about 16°C to about 50°C, alternatively from about 20°C to about 70°C, alternatively from about 40°C to about 65°C, alternatively from about 30°C to about 65°C.

Pressures useful for the production of polyurethanes vary depending on the type of foam and specific process used for production as well understood by those skilled in the art. In various embodiments, the reactants may be combined at any pressure ranging from about -20 mm Hg to about 5 atmospheres, alternatively from about -20 mm Hg to about 2 atmospheres, alternatively from 0 atmospheres to about 1 atmospheres. Still further alternative pressures range from about 584.2 mm Hg to about 889 mm Hg, alternatively from about 660 mm Hg to about 860 mm Hg, alternatively from about 685.8 mm Hg to about 787.4 mm Hg, wherein the pressure at sea level is assumed to be 760 mm Hg. Changes in pressure can be used to adjust the foam density with lower density occurring at reduced pressure and higher density with increased pressure.

Preferably, the reactants are combined at near ambient temperatures and pressures.

The amount of catalyst used in the formation of polyurethane foam will vary depending on the desired properties of the foam, the temperature of reaction, and the pressure of reaction. One of ordinary skill in the art will be able to determine the optimum amount of catalyst without undue experimentation. In an embodiment, the amount of catalyst used ranges from 0.05% to 8.0% based on the total weight of the component, alternatively the amount of catalyst used ranges from 0.1% to 5.0% based on the total weight of the component, alternatively the amount of catalyst used ranges from 0.2% to 3.5% based on the total weight of the component.

Preferably, the formed polyurethane foam has a compression set (50%) less than about 30%, alternatively less than about 20.0%, alternatively less than about 15.0%, alternatively less than about 10.0%, and alternatively less than about 5%.

Preferably, the formed polyurethane foam has an emission of less than about 25.00 micrograms of carbon per gram of formed foam, alternatively less than about 15.0, alternatively less than about 5.00.

Preferably, the formed polyurethane foam has a compression set (50%) less than about 30%, alternatively less than about 20.0%, alternatively less than about 15.0%, alternatively less than about 10.0%, and alternatively less than about 5% and has an emission of less than about 25.00 micrograms of carbon per gram of formed foam, alternatively less than about 15.0, alternatively less than about 5.00.

### Articles of Manufacture

The polyurethane foams formed using the inventive catalyst may be used in a variety of industrial and consumer applications, including automotive seating and trim parts, dash boards, headliners and automotive sealants and elastomers requiring low emissions, rigid spray foams and pour-in place foams used for packaging and construction applications as well as adhesive applications such as ply wood and orientated strand board, semi rigid and semi-flexible foams used for sound and noise control, and the like applications. The preceding list is merely illustrative, and not intended to be limiting.

### EXAMPLES

Polyurethane foams were produced using both TDI and MDI as the isocyanate. The foams were high resilient (HR) molded and free rise foams at densities from 2.5 pound per cubic foot (40 kilograms per cubic meter) to 3.1 pounds per cubic foot (52 kilograms per cubic meter). The base formulation for the MDI foams of Examples 1-3 is shown below in Table 1. Generally, to make the foams, the resin blend components were mixed together. Thereafter, the isocyanate component and the resin blend were mixed together. The catalyst components were added as indicated for the different examples. In Table 1, the amounts of components are given in parts by weight, unless
otherwise indicated.

**Table 1**

| | |
|---|---|
| JEFFOL® G31-28 | 100 |
| Voranol® CP 14-21 | 1.28 |
| Water | 3.64 |
| Diethanolamine | 0.7 |
| Dabco® DC-5164 | 0.23 |
| Dabco® DC-5169 | 0.27 |
| CATALYST COMPONENTS | As indicated for Examples 1-3, below |
| Supersec® 1056 | 49.24 |

JEFFOL®G31-28 is a glycerin based triol made from propylene oxide and ethylene oxide manufactured by Huntsman, Voranol®CP14-21 is a polyol containing more that 50% ethylene oxide manufactured by Dow Chemical Company, diethanol amine is available from Huntsman, Dabco®DC-5164 is a silicone surfactant manufactured by Dow Corning, Dabco®DC-5169 is a silicone surfactant manufactured by Dow Corning, and Supersec®1056 is a modified methylene diisocyanate manufactured by Huntsman.

### Static Headspace Test

This test determines the VOC emission of the foam according to the Volkswagen PV 3341 procedure. To conduct this test, one gram of the foam was placed in a sealed vial, which was then heated to 120°C for five hours. The heated headspace in the vial was injected into a gas chromatograph. A value relative to acetone was determined as microgram carbon per gram of sample. Some result deviation may occur compared to the original automotive test due to somewhat different experimental GC conditions. However, the emission numbers generated provide a valuable comparative rating to assess the emission contributions of foams and formulation components.

### Test Methods for Physical Properties

All foams produced for physical properties were conditioned for at least one week at ambient conditions and were placed in a conditioning chamber at 23°C and 50% relative humidity for at least 24 hours before the tests were run. The tests were carried out according to the ASTM D 3574 standard.

The foams were prepared in accordance with the requirements of PV 3410. The physical property requirements of PV 3410 are shown in Table 2.

**Table 2**

| **Physical Property** | **Standard** | **Units** | **Specification** |
|---|---|---|---|
| Core Density | PV 3410 | Kg/m3 | > 52 |
| CHD-Hardness | PV 3410 | kPa | |
| CLD% Change after Aging Cycle 24h@90°C-200h@90°C/95%RH-24h@70°C | PV 3410 | % | >-25/<+10 |
| Tensile Strength at Break | PV 3410 | kPa | > 90 |
| Tensile Strength at Break after Aging 200h @ 90°C | PV 3410 | kPa | >80 |
| Elongation | PV 3410 | % | >90 |
| Elongation at Break after Aging 200 h @ 90°C | PV 3410 | % | >90 |
| Tensile Strength at Break after Aging Cycle 24h @ 90°C 200h@ 90°C/95% RH-24h@ 70°C | PV 3410 | kPa | > 80 |
| Elongation at Break after Aging Cycle 24 h@ 90°C 200h @7 90°C/ 95% RH-24h @ 70°C | PV 3410 | % | >90 |
| Tear Resistance | PV 3410 | N/cm | >2 |
| Elasticity | ASTM D3574H | | |
| Compression Set 50% for 22 hours @ 70°C | PV 3410 | % | < 8 |
| Humid aged Compression Set 50% for 22 h @ 70°C After Aging Cycle 24h@90°C-200h@90°C/95% RH 24h@ 70°C | PV 3410 | % | <15 |
| PVC Staining | PV 3937 | | |

### EXAMPLE 1

In Formulations 1A-1C, below, the catalyst components were added *in situ* to the resin blend of Table 1. The catalysts of Formulation 1A were not blocked with an acid, whereas the catalysts of Formulations 1B and 1C were blocked with a non-polymer carboxylic acid and a polymer acid respectively.

| **Catalyst Components** | **Formulations** | | |
|---|---|---|---|
| | **1A** | **1B** | **1C** |
| JEFFCAT®TD-33A | 0.25 | | |
| JEFFCAT®ZF-22 | 0.08 | | |
| JEFFCAT®ZF-10 | | 0.2 | 0.2 |
| JEFFCAT®DPA | | 1.02 | 1.0 |
| Lactic acid 50% amine neutralized | | 0.50 | |
| Acrylic acid-Maleic acid copolymer 50% amine neutralized | | | 0.29 |

JEFFCAT®TD-33A and JEFFCAT®ZF-22 are general purpose catalyst, and JEFFCAT®ZF-10 and JEFFCAT®DPA are low emission/reactive tertiary amine catalysts, all available from Huntsman. Lactic acid and acrylic acid-maleic acid copolymer are available from Sigma-Aldrich Chemicals.

| **Results** | **Formulations** | | |
|---|---|---|---|
| | **1A** | **1B** | **1C** |
| Cream time, seconds | 14 | 15 | 18 |
| Mold fill time, seconds | 98 | 128 | 98 |
| Molded density, kilograms per cubic meter | 51.74 | 52.22 | 51.90 |
| Air flow, liters per minute | 29.45 | 34.98 | 26.05 |
| Tensile, Kpa | 110.4 | 118.0 | 83.5 |
| Elongation, % | 189 | 206 | 179 |
| Compression set, 50% | 6.46 | 9.02 | 5.63 |
| Emission, ug carbon per gram foam | 13.55 | 9.02 | 5.63 |

As can be seen from the above the foam made using the polymer acid-blocked catalyst (1C) generally performed better than the other foams. Surprisingly, the emission from the foam of Formulation 1C were about one-third less than the emissions from the carboxylic acid blocked foam (1B), even though both foams contained the same reactive catalysts. Furthermore, reactive catalysts typically have humid age properties, such as compression sets, that are considered relatively poor. In the case of this Example, however, the foam of Formulation 1C gave a compression set that was nearly half that of 1B and better than 1A.

### EXAMPLE 2

Formulations 2A-2F are similar to Formulations 1A-1C in that the catalysts were either unblocked, blocked with a non-polymer acid, or blocked with a polymer acid. But in this example, the catalyst components were preblended to form catalyst salts; the catalyst salts were then added to the resin blend of Table 1.

| **Catalyst Components** | **Formulations** | | | | | |
|---|---|---|---|---|---|---|
| | **2A** | **2B** | **2C** | **2D** | **2E** | **2F** |
| JEFFCAT®ZF-10 | 0.10 | 0.10 | 0.20 | 0.20 | 0.20 | 0.20 |
| JEFFCAT®Z-130 | | 0.92 | 1.11 | 1.11 | 1.10 | 1.10 |
| JEFFCAT®ZR-50 | 0.68 | | 0.68 | 0.68 | 0.85 | 0.85 |
| Lactic acid 50% amine neutralized | | | 0.42 | 0.52 | | |
| Acrylic acid-Maleic acid copolymer 50% amine neutralized | | | | | 0.50 | 0.32 |

JEFFCAT®Z-130 and JEFFCAT®ZR-50 are low emission/reactive amine catalysts, available from Huntsman. Other catalyst components are available as indicated above, in Example 1.

| **Results** | **Formulations** | | | | | |
|---|---|---|---|---|---|---|
| | **2A** | **2B** | **2C** | **2D** | **2E** | **2F** |
| Cream time, seconds | 11 | 9 | 12 | 16 | 14 | 18 |
| Mold fill time, seconds | 61 | 54 | 80 | 74 | 73 | 98 |
| Molded density, kilograms per cubic meter | 51.25 | | 52.06 | 50.62 | 51.26 | 51.26 |
| Air flow, liters per minute | 23.5 | | 25.2 | 26.05 | 15.57 | 14.72 |
| Tensile, Kpa | 101.4 | | 98.0 | 118.0 | 113.9 | 104.9 |
| Elongation, % | 180 | | 171 | 199 | 207 | 179 |

| **Results** | **Formulations** | | | | | |
|---|---|---|---|---|---|---|
| | **2A** | **2B** | **2C** | **2D** | **2E** | **2F** |
| Compression set, 50% | | | 12.15 | 8.72 | 11.54 | 6.47 |
| Emission, ug carbon per gram foam | 5.69 | 4.35 | 10.18 | 10.77 | 8.08 | 7.16 |

As can be seen from the data above, foams made using the polymer-acid blocked catalyst salts (2E and 2F) had emissions that were lower than those of the foams made using a non-polymer acid blocked catalyst. Furthermore, the compression set of the foam made in accordance with Formulation 2F was within the PV 3410 specification.

### EXAMPLE 3

In Example 3, certain amine catalysts were used to make polymer acid salt catalysts as indicated in the Catalyst Component chart below. According to Formulations 3A-3D, a polymer acid salt catalyst was preblended with an unblocked amine catalyst, Thereafter, the catalyst preblends were added to the resin blend of Table 1.

| **Catalyst Components** | **Formulations** | | | |
|---|---|---|---|---|
| | **3A** | **3B** | **3C** | **3D** |
| JEFFCAT®ZF-10 | 0.15 | 0.15 | 0.15 | |
| JEFFCAT®Z-130 PAMA copolymer salt | | 0.7 | | |
| JEFFCAT® DPA PAMA copolymer salt | 0.8 | | | |
| JEFFCAT®TD-33A PAMA copolymer salt | | | 0.36 | |
| JEFFCAT®ZF-10 PAMA copolymer salt | | | | 0.25 |
| JEFFCAT® DPA | | | | 0.8 |

Polyacrylic-co-maleic acid polymer (PAMA) is available from Aldrich Chemical as a 50 % solution of a copolymer of acrylic acid and maleic acid formula weight 188.1, acid equivalent weight 62.7, and polyacrylic acid, (PAA) 2000 molecular weight 50% in water can be obtained from Aldrich Chemical formula weight, 73.07, equivalent weight 73.07-The JEFFCAT® catalysts are available from Huntsman.

| **Results** | **Formulations** | | | |
|---|---|---|---|---|
| | **3A** | **3B** | **3C** | **3D** |
| Cream time, seconds | 24 | 17 | 20 | 12 |
| Mold fill time, seconds | 85 | 68 | 83 | 60 |
| Molded density, kilograms per cubic meter | 52.7 | 49.5 | 51.3 | 52.4 |
| Air flow, liters per minute | 32.0 | 32.0 | 44.17 | 22.3 7 |
| Tensile, Kpa | 103.5 | 94.5 | 91.8 | 82.8 |
| Elongation,% | 167 | 212 | 171 | 180 |
| Compression set, 50% | 10.2 | 8.39 | 6.41 | 10.5 3 |
| Humid aged Compression Set, 50% | 9.47 | 9.38 | 8.83 | 8.73 |
| Emission, ug carbon per gram foam | 5.04 | 5.08 | 6.59 | 5.34 |

As can be seen from the results above, the blends of polymer acid-blocked catalysts with a catalyst that is not blocked does not appreciably alter the general effects of the polymer acid-blocked catalyst alone. In fact, emissions are improved and the humid aged compression sets are all within the PV 3410 specification.

As can be seen by Examples 1-3, the total emissions from the foams are reduced when a polymer acid blocked catalyst is used. Furthermore, the emissions are lower than mono acid blocked tertiary amines or mono acid hydroxyl containing amines. Surprisingly, the humid age compression sets are generally better with foams produced with polymer acid-blocked catalysts. Without being bound by theory, it is believed that the polymer acid salts inhibit the reactions that cause degradation of the foam under humid aging. Additionally, the reaction rate is slower with the polymer acid-blocked catalysts (cream time) even though the molded parts can be demolded faster than non-acid-blocked foams. Without wishing to be bound by the theory, this allows for better liquid distribution in the mold and less imperfections caused by poor liquid distribution of the non-blocked amines.

### EXAMPLES 4 and 5

The polyurethane foams of Examples 4 and 5 were produced using MDI and TDI, respectively as the isocyanate. Generally, to make the foams, the resin components were blended together. Thereafter, the isocyanate component and the resin blend were mixed together. The catalyst components were added as indicated for the different examples. In Table 3, the amounts of components are given in parts by weight, unless otherwise indicated.

**Table 3**

| | **Example** | |
|---|---|---|
| **Resin Component** | **4** | **5** |
| Voranol ®NC700 | | 30.0 |
| Voranol®NC630 | 100.0 | 70.0 |
| Diethanol amine low freeze grade | 0.82 | 1.76 |
| Water (3.64 total, Example 4) Water (4.0 total, Example 5)* | 3.52 | 3.74 |
| Voranol ®CP 1421 | 1.28 | |
| Dabco® DC 5169 | 0.27 | 0.8 |
| Dabco® DC 5164 | 0.23 | |
| Dabco® DC 2525 | | 1.0 |
| **CATALYST COMPONENT-**per the formulations of Examples 4 and 5 | | |

| | **Examples** | |
|---|---|---|
| **Isocyanate** | **4** | **5** |
| TDI | | 45.4 |
| Suprasec® 1056 MDI equivalent weight 128.44 | 56.67 | |
| Isocyanate Index | 98 | 97 |

| | | |
|---|---|---|
| * The total amount of water includes water from other sources such as diethanol amine. Voranol®NC700 is styrene graft copolymer polyol available from Dow Chemical Company. Voranol®NC630 is a 5000 molecular weight propylene oxide based with ethylene oxide capped polyether polyol used for molded foams available from Dow Chemical Company. Diethanol amine low freeze grade is an eighty-five % solution of diethanol amine available from Huntsman Corp. Voranol®CP 1421 is a glycerin based ethylene oxide / propylene oxide polyol for cell opening available from Dow Chemical Company. Dabco®DC 5169 is a silicone surfactant available from Dow Corning. Dabco®DC 5164 is a silicone surfactant available from Dow Corning. Dabco®DC 2525 is a silicone surfactant available from Dow Corning. TDI is toluene diisocyanate available from Dow Chemical Company. Suprasec® 1056 is a modified methylene diisocyanate available from Huntsman Corp. | | |

### EXAMPLE 4

In Formulations 4A-4C, below, the resin components and the catalyst components were premixed for 12 seconds. Thereafter, the isocyanate was added to the resin/catalyst blend which was then mixed for 9 seconds. The completed mix was poured into a cylinder attached to a FOAMAT Rate of Rise Apparatus, available from Format Messtechnik GmbH. The initiation of rise (cream time) and end of rise (rise time) times as measured by the FOAMAT are reported below, in the results chart for Example 4.

| **Catalyst Components** | **Formulations** | | |
|---|---|---|---|
| | **4A** | **4B** | **4C** |
| JEFFCAT®DPA | 0.85 | 0.85 | 0.85 |
| Catalyst 8513-011-A | 0.15 | | |
| Catalyst 8554-027-A (K-XP44) | | 0.15 | |
| Catalyst 8554-027-B (K-XP97) | | | 0.15 |

Catalyst 8513-011-A is a combination of 54.3 % JEFFCAT®ZF-10, 30.2 % water, and 15.5% Goodrite®K-732, Catalyst 8554-027-A is a combination of 54.3% JEFFCAT®ZF-10, 30.2% water, and 15.5% Goodrite®K-XP44, Catalyst 8554-027-B is a combination of 54.3% JEFFCAT®ZF-10, 30.2% water, and 15.5% Goodrite®K-XP-97. Polyacrylic acid (PAA) Goodrite® K732 is a 5500 molecular weight polyacrylic acid in water solution with less than 20 % of acid groups neutralized with sodium hydroxide to a pH above 2.5, PAA Goodrite® XP-44 is a 5500 molecular weight polyacrylic acid with no partial neutralization, and PAA Goodrite®XP-97 is a 2000 molecular weight polyacrylic acid with no partial neutralization of the acid. The JEFFCAT® catalysts are available from Huntsman, and the Goodrite® polyacrylic acids are available from Noveon Corporation.

| **Results** | **Formulations** | | |
|---|---|---|---|
| | **4A** | **4B** | **4C** |
| Cream time, seconds | 12 | 12 | 12 |
| Rise time, seconds | 100.2 | 101.0 | 102.4 |

According to the data above, the use of a homopolymer that was sodium pre-neutralization (4A) had cream times and rise times that are the same as or similar to formulations made with homopolymers (4B and 4C) that were not preneutralized.

### EXAMPLE 5

In Formulations 5A-5F, an amine catalyst was premixed with a polymer acid and then added to the resin blend of Table 3, Example 5. Thereafter, the resein blends with catalyst were each added to the isocyanate. The resultant foams were each poured into a 15x15x4 inch aluminum mold that was heated to 60 °C. Each foam was removed from the mold after 4 minutes and mechanically crushed. Triplicate foams for each formulation were made to obtain the force to crush data. The force crush was determined by compressing the foams 50% (2.0 inches) with a 2 inch diameter disk attached to a Chatillion force gauge, which is available from Ametek Inc.

| **Catalyst Components** | **Formulations** | | | | | |
|---|---|---|---|---|---|---|
| | **5A** | **5B** | **5C** | **5D** | **5E** | **5F** |
| JEFFCAT®ZF-10 | 0.07 | 0.16 | 0.05 | 0.07 | 0.2 | 0.07 |
| JEFFCAT®ZR-50 | 0.42 | | | 0.42 | | |
| JEFFCAT®DPA | | 0.5 | | | 0.57 | |
| JEFFCAT®Z-130 | | | 0.75 | | | 0.6 |
| PAMA | 0.32 | 0.29 | 0.3 | | | |
| PAA (Goodrite®K-732) | | | | 0.37 | 0.33 | 0.34 |

| | | | | | | |
|---|---|---|---|---|---|---|
| *Catalyst components available as previously described. | | | | | | |

| **Results** | **Formulations** | | | | | |
|---|---|---|---|---|---|---|
| | **5A** | **5B** | **5C** | **5D** | **5E** | **5F** |
| Mold fill time, seconds | 56 | 58 | 54 | 55 | 50 | 57 |
| Force to crush, psi | 20.6 | 20.57 | 18.92 | 21.5 | 22.51 | 21.62 |
| Core density, kg per cubic meter | 37.92 | 37.92 | 37.76 | 37.12 | 37.6 | 37.92 |
| (Core density, pound per cubic foot) | (2.37) | (2.37) | (2.36) | (2.32) | (2.35) | (2.37) |
| 50% Compression sets, ambient, % | 4.43 | 3.95 | 4.22 | 3.26 | 4.16 | 3.05 |
| 50% Humid Aged Compression sets, % | 3.84 | 5.18 | 6.32 | 5.53 | 5.14 | 5.17 |
| Tensile MPa | 0.13927 | 0.15444 | 0.13996 | 0.13306 | 0.15788 | 0.15305 |

| **Results** | **Formulations** | | | | | |
|---|---|---|---|---|---|---|
| | **5A** | **5B** | **5C** | **5D** | **5E** | **5F** |
| (Tensile, psi) | (20.2) | (22.4) | (20.3) | (19.3) | (22.9) | (22.2) |
| Elongation, % | 168 | 179 | 139 | 156 | 188 | 177 |
| Tear N/m | 280 | 297.5 | 297.5 | 280 | 297.5 | 315 |
| (Tear, pound per inch) | (1.6) | (1-7) | (1.7) | (1-6) | (1.7) | (1.8) |

From the results above, it can be seen that Formulations 5A-5F each met the specification for the PV 3410 standard for at least the properties of core density, compression set, and humid aged compression set. Thus, both TDI and MDI based foams, whether blocked by a polymer acid that is a homopolymer or a heteropolymer have physical properties that meet certain specification standards.

### ADDITIONAL FORMULATIONS

In Table 4, below, additional formulations for polymer acid blocked catalysts are given. These formulations include polyacrylic-co-maleic acid blocked catalysts in high resilient molded foams.

**Table 4**

| | | **Gram acid/10 gram catalyst** | | | | | |
|---|---|---|---|---|---|---|---|
| **Catalysts** | **Molecular weight** | **10% acid** | **20% Acid** | **30% acid** | **40% acid** | **Eq. weight PAMA** | **Eq. wt Catalyst** |
| JEFFCAT®ZF-10 | 190.29 | 0.65 | 1.318 | 1.977 | 2.636 | 62.7 | 95.14 |
| JEFFCAT®ZF-20 | 160.26 | 0.78 | 1.564 | 2.347 | 3.1299 | | 80.13 |
| JEFFCAT®ZR-70 | 133.19 | 0.47 | 0.941 | 1.412 | 1.883 | | 133.19 |
| JEFFCAT®DPA | 218.34 | 0.57 | 1.148 | 1.723 | 2.297 | | 109.17 |
| JEFFCAT®ZR-50 | 244.387 | 0.769 | 1.539 | 2.309 | 3.078 | | 81.46 |
| JEFFCAT®Z-130 | 187.33 | 1.004 | 3.012 | 3.012 | 4.016 | | 62.44 |
| BisDMAPA urea | 230.36 | 0.544 | 1.088 | 1.578 | 2.177 | | 115.18 |
| JEFFCAT®TR-90 | 342.552 | 0.549 | 1.098 | 1-647 | 2.196 | | 114.18 |
| DMAPA | 102.18 | 1.227 | 2.454 | 3.681 | 4.9089 | | 51.09 |
| JEFFCAT®TD-33A | 112.178 | 1.117 | 2.235 | 3.351 | 4.47 | | 56.089 |

## Claims

1. A method of making a polyurethane foam comprising:
combining a polymer acid and a tertiary amine to form a catalyst; and
combining the catalyst, an isocyanate, and a polyol to form a polyurethane, wherein the polymer acid contains at least two repeating monomers, wherein the first monomer is selected from the group consisting of an unsaturated carboxylic acid and an anhydride, and the second monomer is different from the first monomer.

2. The method of claim 1, wherein combining a polymer acid and a tertiary amine includes combining the polymer acid and the tertiary amine to form a catalyst that is a polymer acid salt and then combining the polymer acid salt catalyst, isocyanate, and polyol.

3. The method of claim 1, wherein combining a polymer acid and a tertiary amine to form a catalyst includes combining the polymer acid and tertiary amine in a same mixture with the isocyanate and polyol, without first precombining the polymer acid and tertiary amine.

4. The method of claims 2 or 3, wherein combining the catalyst, an isocyanate, and a polyol includes combining one or more isocyanates selected from the group consisting of methylene diphenyl diisocyanate (MDI), 2,4- and 2,6-toluene diisocyanate (TDI), triisocyanate polymethylene poly(phenylene isocyanates), polymeric MDI, crude MDI, isophorone diisocyanate, hexamethylene diisocyanate, TMXDI, and mixtures of 2,4-tolulene diisocyanate and 2,6-tolulene diisocyanate (TDI) with the catalyst and polyol.

5. The method of claims 2 or 3 further comprising adding one or more of a crosslinker, a silicone surfactant, a chain extender, a flame proofing agent, and a pigment to either the catalyst, isocyanate, or polyol.

6. The method of claims 2 or 3, including making a polyurethane foam that has a compression set and humid aged compression set of less than 30.0%, wherein the compression set is measured according to the ASTM D 3574 standard.

7. The method of claim 2 or 3, including making a polyurethane foam that forms less than 25.0 micrograms of carbon per gram of the polyurethane foam, wherein the carbon emission is measured according to the PV3341 procedure.

8. The method of claim 1, including making a polyurethane foam that has a compression set and humid aged compression set of less than 20.0%, wherein the compression set and humid aged compression set is measured according to the ASTM D 3574 standard.

9. The method of claim 1, including making a polyurethane foam that has a compression set and humid aged compression set of less than 15.0% and that forms less than 15 micrograms of carbon per gram of formed foam, wherein the compression set and humid aged compression set is measured according to the ASTM D 3574 standard and the carbon emission according to the PV3341 procedure.

10. The method of claim 1, including making a polyurethane foam that has a compression set and humid aged compression set of less than 10.0% and less than 10 micrograms of carbon per gram of formed foam, wherein the compression set and humid aged compression set is measured according to the ASTM D 3574 standard and the carbon emission according to the PV3341 procedure.

11. The method of claim 1, including making a polyurethane foam that has a compression set and humid aged compression set of less than 10.0% and less than 5 micrograms of carbon per gram of formed foam wherein the compression set and humid aged compression set are measured according to the ASTM D 3574 standard.

12. A composition comprising:
a polymer acid; and
a tertiary amine catalyst, said polymer acid and said catalyst to form a polymer acid-blocked catalyst,
wherein the polymer acid contains at least two repeating monomers wherein the first monomer is selected from the group consisting of an unsaturated carboxylic acid and an anhydride, and the second monomer is different from the first monomer.

13. The composition of claims 13 or 14, wherein the unsaturated acid and anhydride is selected from the group consisting of acrylic acid (propenoic acid), maleic acid and anhydride, furoic (pyromucic acid), fumaric acid (boletic acid, lichenic acid, allomaleic acid, transbutenedioic acid), sorbic acid (2-4hexadienoic acid), tiglic acid (methyl crotonic acid, crotonolic acid, trans-2-methyl-2-butenoic acid), linoleic acid, linolenic acid, licanic acid (4-keto-9,11,13-octadectriienoic acid) and other acids containing double bonds capable of reacting with ethylenic unsaturated monomers or dimers.

14. The composition of claim 12, wherein the first monomer is an unsaturated carboxylic acid, and the second, different monomer is a selected from the group consisting of a different unsaturated carboxylic acid, an anhydride, and another monomer.

15. The composition of claim 12, wherein the first monomer is an anhydride, and the second, different monomer is selected from the group consisting of an unsaturated carboxylic acid, a different anhydride, and another monomer.

16. The composition of claim 12, wherein the another monomer is a vinyl monomer selected from the group consisting of styrene, ethylene, propylene, butylene, acrylonitrile, vinyl chloride.

17. The composition of claim 12, wherein the polymer acid is partially neutralized with a group one or a group two alkali metal.

18. The composition of claim 12, wherein the catalyst is one or more tertiary amines selected from the group consisting of triethylene diamine; substituted imidazoles such as 1-2 dimethylimidazole,1-methyl-2-hydroxyethylimidazole; N,N'dimethylpiperazine or substituted piperazines such as aminoethylpiperazine or bis(N-methyl piperazine)ethylurea or N,N',N'trimethyl aminoethylpiperazine; N-methylpyrrolidines and substituted methyl pyrrolidines such as 2-aminoethyl-N,methylpyrrolidines or Bis(N-methylpyrrolidine)ethyl urea; or other tertiary aminoalkylureas or bis(tertiary amino alkyl) urea such as N,N-(3-dimethylaminopropyl)urea; 3-dimethylaminopropylamine; N,N,N"N"tetramethyldipropylenetriamine; N,N-bis(3-dimethylaminopropyl) 1-3propanediamine; N,N-dimethylamino-N',N'bis(hydroxyl-(2)-propylpropylene(1,3)diamine;tetramethylguanidine; Dimethylaminopropylamine, 1,2 bis-diisopropanol(3-dimethylaminopropylamine), substituted piperidines and aminotriazines such N,N dimethylaminopropyl-S-triazine; N-alkylmorpholines such as N-methylmorpholine, N-ethylmorpholine,N-butylmorpholine, and dimorpholinodiethylether; N,Ndimethylaminoethanol; N,N-dimethylaminoethoxyethanol; Bis(dimethylaminopropyl)-amino-2-propanol; Bis(dimethylamino)-2-propanol; Bis(N,N-dimethylamino)ethylether; N,N,N'Trimethyl-N'hydroxyethyl-Bis-(aminoethyl)ether; N,N dimethylaminoethyl-N'-methyl aminoethanol; tetramethyliminobispropylamine, and mixtures thereof.

19. The composition of claim 12, wherein the molar ratio of polymer acid to catalyst ranges from 1:0.05 to 1:100.

## Patentansprüche

1. Verfahren zur Herstellung eines Polyurethanschaums, umfassend:
Kombinieren einer Polymersäure und eines tertiären Amins, um einen Katalysator zu bilden, und
Kombinieren des Katalysators, eines Isocyanats und eines Polyols, um ein Polyurethan zu bilden, wobei die Polymersäure mindestens zwei wiederkehrende Monomere enthält, wobei das erste Monomer aus der aus einer ungesättigten Carbonsäure und einem Anhydrid bestehenden Gruppe ausgewählt ist und sich das zweite Monomer von dem ersten Monomer unterscheidet.

2. Verfahren nach Anspruch 1, wobei das Kombinieren einer Polymersäure und eines tertiären Amins das Kombinieren der Polymersäure und des tertiären Amins, um einen Katalysator zu bilden, der ein Polymersäuresalz ist, und dann Kombinieren des Polymersäuresalzkatalysators, Isocyanats und Polyols einschließt.

3. Verfahren nach Anspruch 1, wobei das Kombinieren einer Polymersäure und eines tertiären Amins, um einen Katalysator zu bilden, das Kombinieren der Polymersäure und des tertiären Amins in einer gleichen Mischung mit dem Isocyanat und dem Polyol einschließt, ohne zuerst die Polymersäure und das tertiäre Amin vorzukombinieren.

4. Verfahren nach Anspruch 2 oder 3, wobei das Kombinieren des Katalysators, eines Isocyanats und eines Polyols das Kombinieren von ein oder mehreren Isocyanaten, ausgewählt aus der aus Methylendiphenyldiisocyanat (MDI), 2,4- und 2,6-Toluoldiisocyanat (TDI), Triisocyanatpolymethylenpoly(phenylenisocyanaten), polymerem MDI, rohem MDI, Isophorondiisocyanat, Hexamethylendiisocyanat, TMXDI und Mischungen von 2,4-Toluoldiisocyanat und 2,6-Toluoldiisocyanat (TDI) bestehenden Gruppe, mit dem Katalysator und Polyol einschließt.

5. Verfahren nach Anspruch 2 oder 3, des Weiteren umfassend die Zugabe eines oder mehrerer Vernetzungsmittel, eines Silikontensids, eines Kettenverlängerungsmittels, eines Flammschutzmittels und eines Pigments zu entweder dem Katalysator, dem Isocyanat oder dem Polyol.

6. Verfahren nach Anspruch 2 oder 3, einbeziehend die Herstellung eines Polyurethanschaums, der einen Druckverformungsrest und einen Druckverformungsrest bei Feuchtalterung von weniger als 30,0% aufweist, wobei der Druckverformungsrest nach dem ASTM D 3574-Standard gemessen wird.

7. Verfahren nach Anspruch 2 oder 3, einbeziehend die Herstellung eines Polyurethanschaums, der weniger als 25,0 Mikrogramm Kohlenstoff pro Gramm des Polyurethanschaums bildet, wobei die Kohlenstoffemission nach dem PV3341-Verfahren gemessen wird.

8. Verfahren nach Anspruch 1, einbeziehend die Herstellung eines Polyurethanschaums, der einen Druckverformungsrest und einen Druckverformungrest bei Feuchtalterung von weniger als 20% aufweist, wobei der Druckverformungsrest und der Druckverformungsrest bei Feuchtalterung nach dem ASTM D 3574-Standard gemessen wird.

9. Verfahren nach Anspruch 1, einbeziehend die Herstellung eines Polyurethanschaums, der einen Druckverformungsrest und einen Druckverformungsrest bei Feuchtalterung von weniger als 15,0% aufweist und der weniger als 15 Mikrogramm Kohlenstoff pro Gramm gebildetem Schaum bildet, wobei der Druckverformungsrest und der Druckverformungsrest bei Feuchtalterung nach dem ASTM D 3574-Standard und die Kohlenstoffemission nach dem PV3341-Verfahren gemessen wird.

10. Verfahren nach Anspruch 1, einbeziehend die Herstellung eines Polyurethanschaums, der einen Druckverformungsrest und einen Druckverformungsrest bei Feuchtalterung von weniger als 10,0% und weniger als 10 Mikrogramm Kohlenstoff pro Gramm gebildetem Schaum aufweist, wobei der Druckverformungsrest und der Druckverformungsrest bei Feuchtalterung nach dem ASTM D 3574-Standard und die Kohlenstoffemission nach dem PV3341-Verfahren gemessen wird.

11. Verfahren nach Anspruch 1, einbeziehend die Herstellung eines Polyurethanschaums, der einen Druckverformungsrest und einen Druckverformungsrest unter Feuchtalterung von weniger als 10,0% und weniger als 5 Mikrogramm Kohlenstoff pro Gramm gebildetem Schaum aufweist, wobei der Druckverformungsrest und der Druckverformungsrest bei Feuchtalterung nach dem ASTM D 3574-Standard gemessen wird.

12. Zusammensetzung, umfassend:
eine Polymersäure und
einen tertiären Amin-Katalysator, die Polymersäure und den Katalysator zur Bildung eines Polymersäure-blockierten Katalysators,
wobei die Polymersäure mindestens zwei wiederkehrende Monomere enthält,
wobei das erste Monomer aus der aus ungesättigter Carbonsäure und einem Anhydrid bestehenden Gruppe ausgewählt ist und sich das zweite Monomer von dem ersten Monomer unterscheidet.

13. Zusammensetzung nach Anspruch 13 oder 14, wobei die ungesättigte Säure und das Anhydrid aus der Gruppe ausgewählt sind, die besteht aus Acrylsäure (Propensäure), Maleinsäure und Anhydrid, Furoesäure (Pyromuconsäure), Fumarsäure (Boletsäure, Lichensäure, Allomaleinsäure, trans-Butendisäure), Sorbinsäure (2,4-Hexadiensäure), Tiglinsäure (Methylcrotonsäure, Crotonolsäure, trans-2-Methyl-2-butensäure), Linolsäure, Linolensäure, Licansäure (4-Keto-9,11,13-octadecatriensäure) und andere Doppelbindungen enthaltenden Säuren, die zur Reaktion mit ethylenisch ungesättigten Monomeren oder Dimeren im Stande sind.

14. Zusammensetzung nach Anspruch 12, wobei das erste Monomer eine ungesättigte Carbonsäure und das unterschiedliche zweite Monomer aus der aus unterschiedlichen ungesättigten Carbonsäuren, einem Anhydrid und einem anderen Monomer bestehenden Gruppe ausgewählt ist.

15. Zusammensetzung nach Anspruch 12, wobei das erste Monomer ein Anhydrid ist und das unterschiedliche zweite Monomer aus der aus einer ungesättigten Carbonsäure, einem unterschiedlichen Anhydrid und einem anderen Monomer bestehenden Gruppe ausgewählt ist.

16. Zusammensetzung nach Anspruch 12, wobei das andere Monomer ein Vinylmonomer ist, das der aus Styrol, Ethylen, Propylen, Butylen, Acrylonitril, Vinylchlorid bestehenden Gruppe ausgewählt ist.

17. Zusammensetzung nach Anspruch 12, wobei die Polymersäure mit einem Alkalimetall der Gruppe eins oder der Gruppe zwei neutralisiert ist.

18. Zusammensetzung nach Anspruch 12, wobei der Katalysator ein oder mehrere tertiäre Amine darstellt, ausgewählt aus der Gruppe, bestehend aus Triethylendiamin, substituierten Imidazolen, wie 1,2-Dimethylimidazol, 1-Methyl-2-hydroxyethylimidazol, N,N'-Dimethylpiperazin oder substituierten Piperazinen, wie Aminoethylpiperazin oder Bis(N-methylpiperazin)ethylharnstoff oder N,N',N'-Trimethylaminoethylpiperazin, N-Methylpyrrolidinen und substituierten Methylpyrrolidinen, wie 2-Aminoethyl-N-methylpyrrolidinen oder Bis(N-methylpyrrolidin)ethylharnstoff oder anderen tertiären Aminoalkylharnstoffen oder Bis(tertiär-aminoalkyl)harnstoff, wie N,N-(3-Dimethylaminopropyl)harnstoff, 3-Dimethylaminopropylamin, N,N,N",N"-Tetramethyldipropylentriamin, N,N-bis(3-Dimethylaminopropyl)-1,3-propandiamin, N,N-Dimethylamino-N',N'-bis(hydroxyl-(2)-propylpropylen(1,3)diamin, Tetramethylguanidin, Dimethylaminopropylamin, 1,2-bis-Diisopropanol(3-dimethylaminopropylamin), substituierte Piperidinen und Aminotriazinen, wie N,N-Dimethylaminopropyl-S-triazin, N-Alkylmorpholinen, wie N-Methylmorpholin, N-Ethylmorpholin, N-Butylmorpholin und Dimorpholinodiethylether, N,N-Dimethylaminoethanol, N,N-Dimethylaminoethoxyethanol, Bis(dimethylaminopropyl)-amino-2-propanol, Bis-(dimethylamino)-2-propanol, Bis(N,N-dimethylamino)ethylether, N,N,N'-Trimethyl-N'-hydroxyethyl-bis-(aminoethyl)ether, N,N-Dimethylaminoethyl-N'-methylaminoethanol, Tetramethyliminobispropylamin und Mischungen davon.

19. Zusammensetzung nach Anspruch 12, wobei sich das Molverhältnis von Polymersäure zu Katalysator von 1:0,05 bis 1:100 erstreckt.

## Revendications

1. Procédé pour la préparation d'une mousse de polyuréthanne, comprenant:
la combinaison d'un acide polymère et d'une amine tertiaire pour former un catalyseur ;
la combinaison du catalyseur, d'un isocyanate et d'un polyol pour former un polyuréthanne, dans lequel l'acide polymère contient au moins deux monomères répétés, le premier monomère étant choisi dans le groupe consistant en un acide carboxylique insaturé et un anhydride, et le second monomère étant différent du premier monomère.

2. Procédé suivant la revendication 1, dans lequel la combinaison d'un acide polymère et d'une amine tertiaire comprend la combinaison de l'acide polymère et de l'amine tertiaire pour former un catalyseur qui est un sel d'acide polymère et ensuite la combinaison du catalyseur à base de sel d'acide polymère, d'un isocyanate et d'un polyol.

3. Procédé suivant la revendication 1, dans lequel la combinaison d'un acide polymère et d'une amine tertiaire pour former un catalyseur comprend la combinaison de l'acide polymère et de l'amine tertiaire dans le même mélange avec l'isocyanate et le polyol, sans précombiner initialement l'acide polymère et l'amine tertiaire.

4. Procédé suivant la revendication 2 ou 3, dans lequel la combinaison du catalyseur, d'un isocyanate et d'un polyol comprend la combinaison d'un ou plusieurs isocyanates choisis dans le groupe consistant en le méthylènediphényldiisocyanate (MDI), les 2,4- et 2,6-toluène-diisocyanates (TDI), des triisocyanates polyméthylène-poly(phénylèneisocyanates), un MDI polymère, un MDI brut, l'isophorone-diisocyanate, l'hexaméthylène-diisocyanate, le TMXDI, et des mélanges de 2,4-tolulène-diisocyanate et de 2,6-tolulène-diisocyanate (TDI) avec le catalyseur et le polyol.

5. Procédé suivant la revendication 2 ou 3, comprenant en outre l'addition d'un ou plusieurs d'un agent de réticulation, d'un agent tensioactif à base de silicone, d'un agent d'allongement de chaîne, d'un agent ignifuge et d'un pigment au catalyseur, à l'isocyanate ou au polyol.

6. Procédé suivant la revendication 2 ou 3, comprenant la préparation d'une mousse de polyuréthanne qui a une déformation en compression et une déformation en compression après vieillissement à l'état humide inférieures à 30,0 %, dans lequel la déformation en compression est mesurée suivant la norme ASTM D3574.

7. Procédé suivant la revendication 2 ou 3, comprenant la préparation d'une mousse de polyuréthanne qui forme moins de 25,0 microgrammes de carbone par gramme de mousse de polyuréthanne, dans lequel l'émission de carbone est mesurée suivant le mode opératoire PV3341.

8. Procédé suivant la revendication 1, comprenant la préparation d'une mousse de polyuréthanne qui a une déformation en compression et une déformation en compression après vieillissement à l'état humide inférieures à 20,0 %, dans lequel la déformation en compression et la déformation en compression après vieillissement à l'état humide sont mesurées suivant la norme ASTM D3574.

9. Procédé suivant la revendication 1, comprenant la préparation d'une mousse de polyuréthanne qui a une déformation en compression et une déformation en compression après vieillissement à l'état humide inférieures à 15,0 % et qui forme moins de 15 microgrammes de carbone par gramme de mousse formée, dans lequel la déformation en compression et la déformation en compression après vieillissement à l'état humide sont mesurées suivant la norme ASTM D3574 et l'émission de carbone est mesurée suivant le mode opératoire PV3341.

10. Procédé suivant la revendication 1, comprenant la préparation d'une mousse de polyuréthanne qui a une déformation en compression et une déformation en compression après vieillissement à l'état humide inférieures à 10,0 % et qui comprend moins de 10 microgrammes de carbone par gramme de mousse formée, dans lequel la déformation en compression et la déformation en compression après vieillissement à l'état humide sont mesurées suivant la norme ASTM D3574 et l'émission de carbone est mesurée suivant le mode opératoire PV3341.

11. Procédé suivant la revendication 1, comprenant la préparation d'une mousse de polyuréthanne qui a une déformation en compression et une déformation en compression après vieillissement à l'état humide inférieures à 10,0 % et qui comprend moins de 5 microgrammes de carbone par gramme de mousse formée, dans lequel la déformation en compression et la déformation en compression après vieillissement à l'état humide sont mesurées suivant la norme ASTM D3574.

12. Composition comprenant :
un acide polymère ; et
un catalyseur du type amine tertiaire, ledit acide polymère et ledit catalyseur formant un catalyseur bloqué avec un acide polymère,
dans laquelle l'acide polymère contient au moins deux monomères répétés, le premier monomère étant choisi dans le groupe consistant en un acide carboxylique insaturé et un anhydride, et le second monomère étant différent du premier monomère.

13. Composition suivant la revendication 13 ou 14, dans laquelle l'acide insaturé et l'anhydride sont choisis dans le groupe consistant en l'acide acrylique (acide propénoïque), l'acide maléique et l'anhydride maléique, l'acide furoïque (acide pyromucique), l'acide fumarique (acide bolétique, acide lichénique, acide allomaléique, acide transbutènedioïque), l'acide sorbique (acide 2,4-hexa-diénoïque), l'acide tiglique (acide méthylcrotonique, acide crotonolique, acide trans-2-méthyl-2-buténoïque), l'acide linoléique, l'acide linolénique, l'acide licanique (acide 4-céto-9,11,13-octadécatriénoïque) et d'autres acides contenant des doubles liaisons capables de réagir avec des monomères ou dimères à insaturation éthylénique.

14. Composition suivant la revendication 12, dans laquelle le premier monomère est un acide carboxylique insaturé, et le second monomère, différent, est choisi dans le groupe consistant en un acide carboxylique insaturé différent, un anhydride et un autre monomère.

15. Composition suivant la revendication 12, dans laquelle le premier monomère est un anhydride et le second monomère, différent, est choisi dans le groupe consistant en un acide carboxylique insaturé, un anhydride différent et un autre monomère.

16. Composition suivant la revendication 12, dans laquelle l'autre monomère est un monomère vinylique choisi dans le groupe consistant en le styrène, l'éthylène, le propylène, le butylène, l'acrylonitrile et le chlorure de vinyle.

17. Composition suivant la revendication 12, dans laquelle l'acide polymère est neutralisé partiellement avec un métal alcalin du Groupe un ou du Groupe deux.

18. Composition suivant la revendication 12, dans laquelle le catalyseur consiste en une ou plusieurs amines tertiaires choisies dans le groupe consistant en la triéthylènediamine, des imidazoles substitués tels que le 1,2-diméthylimidazole, le 1-méthyl-2-hydroxyéthylimidazole ; la N,N'-diméthylpipérazine ou des pipérazines substituées telles que l'aminoéthylpipérazine ou la bis(N-méthyl-pipérazine)éthylurée ou la N,N',N'-triméthylaminoéthyl-pipérazine ; des N-méthylpyrrolidines et des méthylpyrrolidines substituées telles que des 2-aminoéthyl-N-méthylpyrrolidines ou la bis(N-méthylpyrrolidine)éthylurée ; ou d'autres aminoalkylurées tertiaires ou une bis(tertio-amino-alkyl)urée telle que la N,N-(3-diméthylaminopropyl)-urée ; la 3-diméthylaminopropylamine ; la N,N,N"N"-tétraméthyldipropylènetriamine ; la N,N-bis(3-diméthyl-aminopropyl)-1,3-propanediamine ; la N,N-diméthylamino-N',N'-bis(hydroxy-(2)-propylpropylène(1,3)diamine ; la tétraméthyl-guanidine ; la diméthylaminopropylamine, la 1,2 bis-diisopropanol-(3-diméthylaminopropylamine), des pipéridines substituées et des aminotriazines telles que la N,N-diméthylaminopropyl-S-triazine ; des N-alkylmorpholines telles que la N-méthylmorpholine, la N-éthylmorpholine, la N-butylmorpholine, et l'éther dimorpholinodiéthylique ; le N,N-diméthylaminoéthanol ; le N,N-diméthylaminoéthoxy-éthanol ; le bis(diméthylaminopropyl)-amino-2-propanol ; le bis(diméthylamino)-2-propanol ; l'éther bis(N,N-diméthyl-amino)éthylique ; l'éther N,N,N'-triméthyl-N'-hydroxyéthyl-bis-(aminoéthylique) ; le N,N-diméthylaminoéthyl-N'-méthyl-aminoéthanol ; la tétraméthyliminobispropylamine et leurs mélanges.

19. Composition suivant la revendication 12, dans laquelle le rapport molaire de l'acide polymère au catalyseur va de 1:0,05 à 1:100.
